# EUROPÄISCHE PATENTSCHRIFT

(11) **EP 0 733 842 B1**
(45) Veröffentlichungstag und Bekanntmachung des Hinweises auf die Patenterteilung: **10.02.1999**
(21) Anmeldenummer: 96103604.3
(22) Anmeldetag: 08.03.1996
(51) Int. Cl.: F16L 3/133

(54) **Rohrschelle**
Pipe clamp
Collier de serrage

(30) Priorität: 24.03.1995 DE 29504714 U
(43) Veröffentlichungstag der Anmeldung: 25.09.1996
(73) Patentinhaber: Friatec Aktiengesellschaft, 68229 Mannheim (DE)
(72) Erfinder: Büchner, Andreas, 96472 Rödental (DE); Herppig, Henri, 96472 Rödental (DE)
(74) Vertreter: Klose, Hans, Dipl.-Phys.

(56) Entgegenhaltungen:
- EP-A- 0 235 629
- DE-A- 3 415 294
- DE-U- 1 961 346
- DE-U- 9 402 967

## Beschreibung

Die Erfindung bezieht sich auf eine Rohrschelle gemäß den im Oberbegriff des Patentanspruchs 1 angegebenen Merkmalen.

Aus dem deutschen Gebrauchsmuster gemäß DE 94 02 967 U1 ist eine derartige Rohrschelle mit einem auf einen Außendurchmesser eines Rohres abgestimmten Bügel bekannt, mit welchem ein im wesentlichen steifes Verbindungselement über ein elastisches Scharnier verbunden ist. Somit kann das Verbindungselement vom Bügel derart weggeschwenkt werden, daß der Bügel auf ein Rohr aufgesetzt werden kann. Nachfolgend wird das Verbindungselement um die Scharnierachse geschwenkt und um die Außenfläche des Rohres gelegt, wobei über Arretiermittel eine Kopplung des Bügels mit dem freien Ende des Verbindungselements erfolgt. Der Bügel enthält ferner ein Innengewinde für ein als Gewindebolzen ausgebildetes Halteelement, über welches die Verbindung mit einem Träger einer Wand, Decke oder sonstigen Gebäudeteilen ermöglicht wird. Bei beengten Montageverhältnissen kann die Verbindung der Rohrschelle mit dem Rohr und/oder die Verbindung der Rohrschelle mit dem Gebäude zu Problemen führen. Die Herstellung der Verbindung zwischen Bügel und Gewindebolzen erfordert Werkzeuge, welche bei eingen Platzverhältnissen nicht ohne weiteres einsetzbar sind. Die Handhabung bei einem geringen Bewegungsfreiraum kann recht umständlich und mühsam sein. Besonders sei auf die Montage von sanitären Bauteilen wie WC-Schüsseln oder Bidets hingewiesen, deren Abflußrohre unter sehr beengten Platzverhältnissen installiert werden müssen.

Hiervon ausgehend liegt der Erfindung die Aufgabe zugrunde, eine Rohrschelle der genannten Art dahingehend weiterzubilden, daß eine einfache Handhabung bei der Montage ermöglicht und gleichwohl eine funktionssichere Festlegung des Rohres gewährleistet ist. Der Einsatz von Werkzeugen zur Montage soll möglichst vermieden werden und eine schnelle und problemlose Montage der Rohrleitung soll sichergestellt sein. Ferner soll die Rohrschelle eine funktionssichere Konstruktion aufweisen und einen geringen Material- und Fertigungsaufwand erfordern. Die Rohrschelle soll besonders für die Festlegung von Abflußrohren von sanitären Bauteilen geeignet sein und auch bei engen Platzverhältnissen eine einfache und gleichwohl sichere Montage und Festlegung des Abflußrohres gewährleisten.

Die Lösung dieser Aufgabe erfolgt gemäß den kennzeichnenden Merkmalen des Anspruchs 1.

Die vorgeschlagene Rohrschelle zeichnet sich durch eine funktionssichere Konstruktion aus und ermöglicht eine problemlose Handhabung bei der Montage der Rohrleitung und/oder eines Sanitärelemcnts, wie insbesondere einer WC-Schüssel. Die Rohrschelle enthält einen derart ausgebildeten Bügel, daß er beim Aufsetzen auf das Rohr federelastisch aufgespreizt wird, nachfolgend das Rohr teilweise umgreift und eine zumindest provisorische Festlegung ermöglicht. Danach kann die Rohrschelle bezüglich des Rohres in die gewünschte Drehwinkelstellung gedreht und positioniert werden. Die Rohrschelle besitzt ferner wenigstens ein Halteelement, welches mit einem Befestigungskörper korrespondiert und/oder in Eingriff bringbar ist. Der Befestigungskörper ist zuvor am Gebäude zu montieren und kann in zweckmäßiger Weise als Bestandteil einer Tragkonstruktion, insbesondere eines Spülkastens, ausgebildet sein. Der Befestigungskörper und die Halteelemente der Rohrschelle sind in zweckmäßiger Weise derart aufeinander abgestimmt, daß der Abstand des Rohres zur Wand verschieden groß sein kann.

Besondere Ausgestaltungen und Weiterbildungen der Erfindung sind in den Unteransprüchen sowie der Beschreibung eines Ausführungsbeispiels angegeben.

Die Erfindung wird nachfolgend anhand des in der Zeichnung dargestellten Ausführungsbeispiels näher erläutert. Es zeigen:
- Fig. 1: eine schematische Darstellung der Rohrschelle vor dem Aufsetzen auf ein Rohr,
- Fig. 2: die mit dem Rohr verbundene Rohrschelle,
- Fig. 3: die Rohrschelle samt Rohr und zugeordneten Befestigungskörper.

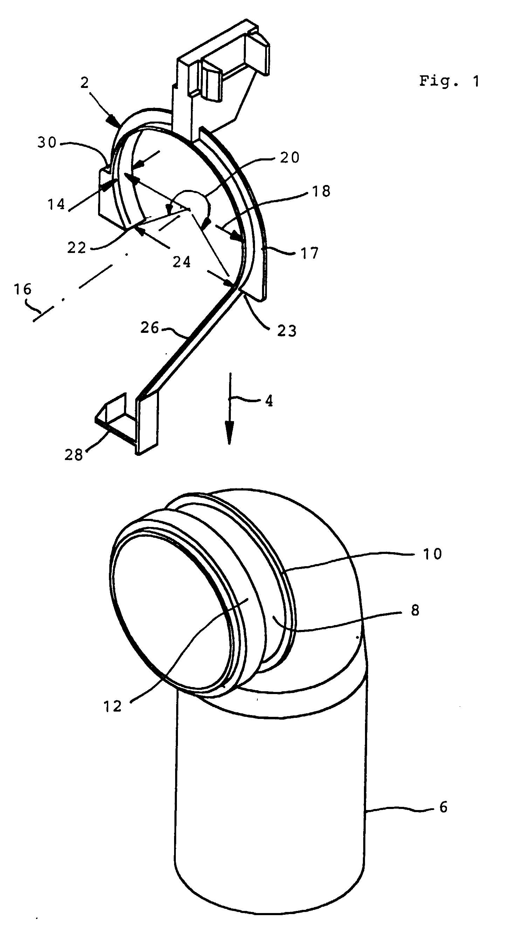

Fig. 1 zeigt die erfindungsgemäße Rohrschelle, welche einen gebogenen Bügel 2 aufweist. Der Bügel 2 ist in Richtung eines Pfeiles 4 auf ein Rohr 6 aufsetzbar und mit diesem verbindbar. Das Rohr 6 enthält für den Bügel 2 der Rohrschelle einen Aufnahmebereich 8, mit zwei axialen Anschlägen 10, 12, welche vorzugsweise als Ringbunde ausgebildet sind und einen vorgegebenen axialen Abstand aufweisen. Die axiale Länge 14 des Bügels 2 ist auf den genannten Abstand der Anschläge 10, 12 derart abgestimmt, daß der Bügel 2 in den Aufnahmebereich 8 eingesetzt werden kann und axiale Relativbewegungen in Richtung der Achse 16 zumindest näherungsweise vermieden werden.

Die Rohrschelle besteht zweckmäßig aus einem federelastischen Material, insbesondere Kunststoff, so daß der Bügel 2 zum Aufsetzen auf das Rohr 6 aufgebogen werden kann. Der Bügel 2 besitzt einen im Prinzip T-förmigen Querschnitt mit einer radial nach außen weisenden Rippe 17, welche sich vorzugsweise über den gesamten Umfang des Bügels 2 erstreckt. Aufgrund des T-förmigen Querschnitts wird mit geringem Materialaufwand eine hohe Festigkeit und Stabilität erreicht, wobei gleichzeitig durch die federelastischen Eigenschaften des Materials ein Aufsetzen des Bügels in den korrespondierenden Aufnahmebereich 8 des Rohres 6 ermöglicht wird. Der Innendurchmesser 18 des Bügels 2 ist auf den Rohr-Außendurchmesser, und zwar im Aufnahmebereich 8, abgestimmt. Wie ersichtlich, erstreckt sich der Bügel 2 über einen Winkel 20, welcher größer als 180° ist. Die unteren freien Enden 22, 23 des Bügels 2 weisen einen Abstand 24 zueinander auf, welcher um einen vorgegebenen Betrag kleiner ist als der Innendurchmesser 18. Aufgrund der Federelastizität des Bügels 2 kann er folglich auf das Rohr 6 in Richtung des Pfeiles 4 aufgesetzt werden, wobei zunächst die freien Enden 22, 23 auseinandergebogen werden und nach dem vollständigen Aufsetzen eine vorläufige Fixierung und Halterung der Rohrschelle bezüglich des Rohres 6 gewährleisten.

Die Rohrschelle enthält weiterhin ein Verbindungselement 26, welches nach dem Aufsetzen auf das Rohr eine definierte Festlegung ermöglicht, wobei aber eine Drehung der Rohrschelle bezüglich der Längsachse 16 ermöglicht wird. Das Verbindungselement 26 ist vorzugsweise einteilig mit dem Bügel 2 ausgebildet und/oder als flexibles Band ausgebildet. Das flexible, vorzugsweise bandförmige Verbindungselement 26 bildet die Verlängerung des Bügels 2 über dessen eines Ende 22 hinaus. Aufgrund der in sich flexiblen Ausbildung des Verbindungselements 26 ist ein störanfälliges Scharnier zwischen dem Bügel 2 und dem Verbindungselement 26 nicht erforderlich. Gleichwohl sind der Bügel 2 und das Verbindungselement 26 einteilig ausgebildet und ein unerwünschtes Lösen des Verbindungselements von dem Bügel 2 wird funktionssicher ausgeschlossen. Ersichtlich kann das Verbindungselement 26 nach dem Aufsetzen des Bügels 2 auf den Aufnahmebereich 8 an der Unterseite des Rohres herumgeschlungen werden und mit dem anderen freien Ende 20 des Bügels 2 verbunden werden.

Hierfür ist vorzugsweise eine Rastverbindung vorgesehen. Diese Rastverbindung enthält einerseits am Verbindungselement 26 ein Rastelement 28 und am Ende 20 des Bügels 2 andererseits einen zugeordneten Rastkörper 30. Das Rastelement 28 kann nach dem Umschlingen des Rohres 2 mit dem Rastkörper 30 ohne Werkzeuge problemlos in Eingriff gebracht werden. Das hakenförmig ausgebildete Rastelement 28 ist im Vergleich zum flexiblen Verbindungselement 26 steifer ausgebildet und kann daher problemlos mit den Händen bzw. Fingern ergriffen werden und in den Rastkörper 30 eingesetzt bzw. eingeclipst werden. Es sei festgehalten, daß das Rastelement 28, der Rastkörper 30 sowie das Verbindungselement 26 integrale Bestandteile der Rohrschelle sind.

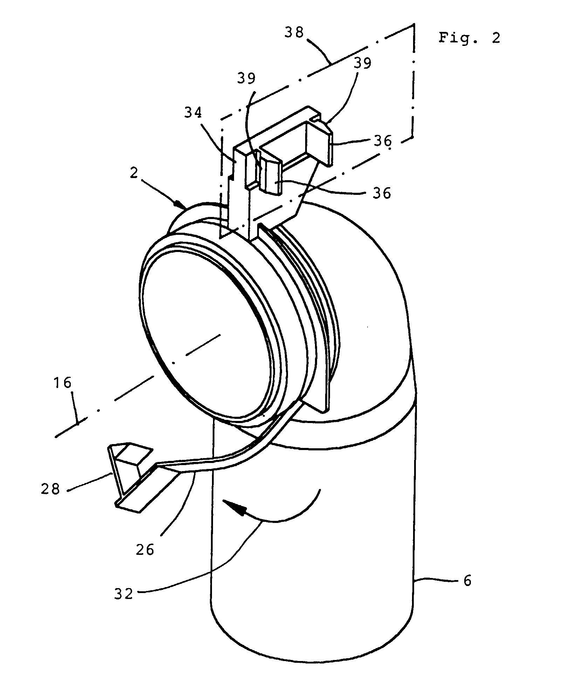

In Fig. 2 ist mittels eines Pfeiles 32 das Herumschlingen des Verbindungselements 26 um die Unterseite des Rohres 6 im Aufnahmebereich dargestellt. Nachfolgend wird das hakenförmige Rastelement 28 mit dem vorstehend erläuterten Rastkörper des Bügels 2 in Eingriff gebracht und dauerhaft verankert. Der Bügel 2, das Verbindungselement 26 sowie die Rastverbindung sind derart dimensioniert, daß nach Herstellung der genannten Verbindung die Rohrschelle insgesamt bezüglich des Rohres 6 um die Achse 16 gedreht und in der gewünschten Weise positioniert werden kann. Diese Drehbarkeit wird durch ein hinreichendes Spiel gewährleistet, welches andererseits aber derart vorgegeben ist, daß unerwünscht große Relativbewegungen zwischen der Rohrschelle und dem Rohr 6 vermieden werden.

Etwa in der Mitte der Umfangserstreckung des Bügels 2 ist ein Halteelement 34 vorgesehen, welches die Verbindung mit einem durch strichpunktierte Linien angedeuteten Befestigungskörper 38 ermöglicht. Auch das Halteelement 34 ist in zweckmäßiger Weise integraler Bestandteil der Rohrschelle, wodurch eine einfache und kostengünstige Fertigung gewährleistet ist. Das Halteelement 34 weist wenigstens einen Rastarm 36, vorzugsweise zwei derartige Rastarme 36 auf, welche mit zugeordneten Teilen des Befestigungskörpers in Eingriff bringbar sind. Die beiden Rastarme 36 sind einander entgegengesetzt ausgerichtet, und ihre hinterschnittene Eingriffsflächen 39 liegen vorzugsweise auf voneinander abgewandten Seiten oder umgekehrt.

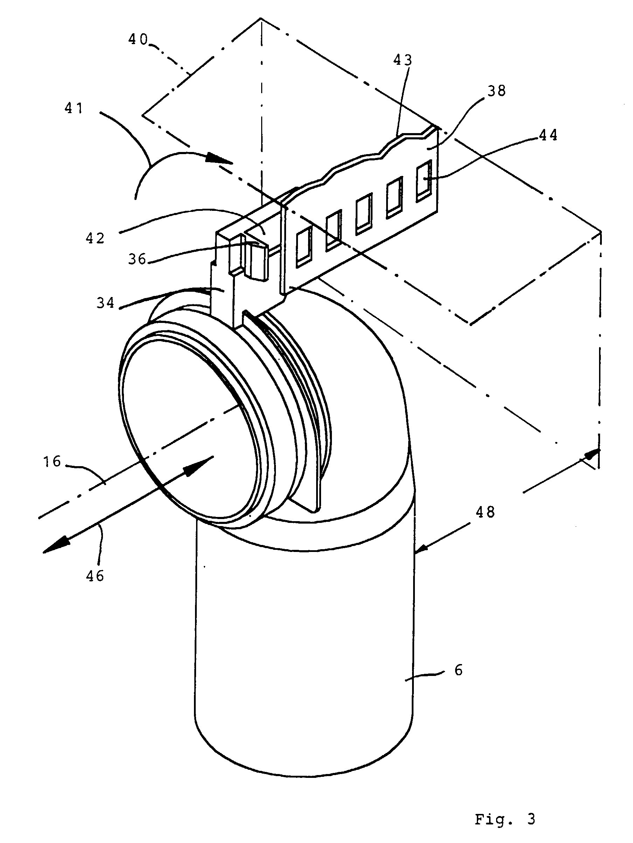

Fig. 3 zeigt die Rohrschelle mit dem Halteelement 34 und den zugeordneten Befestigungskörper 38. Der Befestigungskörper 38 ist in geeigneter Weise mit dem Gebäude, einer Wand oder sonstigen Bauteilen verbunden. Der Befestigungskörper 38 ist zweckmäßig Bestandteil einer hier mit strichpunktierten Linien angedeuteten Konsole 40, welche in geeigneter Weise an dem Gebäude oder dergleichen befestigt ist. Der Befestigungskörper 38 und/oder die Konsole 40 sind vor der Montage eines Sanitärelements, wie insbesondere einer WC-Schüssel, sowie des Rohres 6 mit dem Gebäude oder dergleichen verbunden worden. Auf der Konsole 40 oder einer sonstigen mit dem Befestigungskörper 38 verbundenen Tragkonstruktion ist vorzugsweise ein Spülkasten montiert. Ersichtlich ist im Bereich des Befestigungskörpers 38 nur wenig Raum zur Handhabung und Montage des Rohres 6 mit der Rohrschelle.

Die mit dem Rohr 6 gekoppelte Rohrschelle wird erfindungsgemäß zur endgültigen Befestigung in Richtung des Pfeiles 41 bezüglich der Längsachse 16 um die Außenfläche des Rohres derart gedreht, daß das Halteelement 34, insbesondere dessen Rastarme 36, mit dem Befestigungskörper 38 in Eingriff gebracht werden. Durch die erfindungsgemäße Rastverbindung wird eine automatische Kopplung bei Beendigung der Drehbewegung der Rohrschelle, infolge Anlage des Halteelements am Befestigungskörper selbsttätig erreicht.

Das Halteelement 34 besitzt eine Anlagefläche 42, welcher eine korrespondierende Anlagefläche 43 des Befestigungskörpers 38 zugeordnet ist. Die Anlagefläche 43 des Befestigungskörpers 38 liegt gemäß Fig. 3 auf der nicht sichtbaren Rückseite des Befestigungskörpers 38. Durch die Anlageflächen wird die erfindungsgemäß durchzuführende Drehung der gesamten Rohrschelle begrenzt, wobei gleichzeitig die Kopplung bzw. der Eingriff des Halteelements 34 mit dem Befestigungskörper 38 automatisch erfolgt. Die Drehung der Rohrschelle kann problemlos mit der Hand auch unter extrem engen Platzverhältnissen, wie insbesondere hinter einer WC-Schüssel zur Festlegung eines Abflußrohres derselben praktisch "im Dunkeln" durchgeführt werden, ohne daß hierzu besondere Werkzeuge, die zweite Hand oder freie Sichtverhältnisse notwendig sind. Durch die mit einer einzigen Hand zu erledigende Drehung der Rohrschelle bis zum Anschlag des Halteelements 34 am Befestigungskörper 38 und der hierbei selbsttätig erfolgenden Kopplung mit letzterem wird die Handhabung bei der Montage maßgeblich erleichtert. In besonders zweckmäßiger Weise liegen die Anlageflächen 42 und 43 in Ebenen parallel zur Längsachse 16 bzw. in diesbezüglichen Axialebenen. Hierdurch wird eine definierte Anlage und ein sicherer, definierter Stop der Drehbewegung gewährleistet. Vorzugsweise ist der Befestigungskörper 38 ebenso wie der Haltekörper 34 jeweils in einer der genannten Axialebenen angeordnet. Wie nachfolgend noch zu erläutern ist, wird durch die genannte axiale Ausrichtung zumindest der Anlageflächen 42, 43 die axiale Positionierung der Rohrschelle bezüglich des Befestigungskörpers 38 in einfacher Weise ermöglicht.

Den Rastarmen zugeordnet, von welchen hier nur der eine Rastarm 36 zu erkennen ist, besitzt der Befestigungskörper 38 eine Anzahl von Ausnehmungen 44. Die parallel zur Längsachse 16 gemessenen Abstände der einzelnen Ausnehmungen 44 sind auf die Abstände der genannten Rastarme 36 abgestimmt. Somit kann das Rohr 6 in Richtung des Doppelpfeiles 46 axial bezüglich des Befestigungskörpers 38 in der erforderlichen Weise positioniert werden. Je nach den örtlichen Gegebenheiten und Montagebedingungen ist nämlich der Abstand 48 des Rohres 6 zum Gebäude bzw. der Gebäudewand unterschiedlich groß, und durch die erläuterte Ausbildung des Befestigungskörpers 38 sowie des zugeordneten Halteelements 34 kann die Befestigung des Rohres 6 mittels der Rohrschelle in der erforderlichen Weise vorgenommen werden.

### Bezugszeichen

- 2: Bügel
- 4: Pfeil
- 6: Rohr
- 8: Aufnahmebereich
- 10, 12: Anschlag
- 14: axiale Länge
- 16: Achse
- 17: Rippe
- 18: Innendurchmesser von 2
- 20: Winkel
- 22, 23: freies Ende von 2
- 24: Abstand zwischen 22 und 23
- 26: Verbindungselement
- 28: Rastelement
- 30: Rastkörper
- 32: Pfeil
- 34: Halteelement
- 36: Rastarm
- 38: Befestigungskörper
- 39: Eingriffsfläche
- 40: Konsole
- 41: Pfeil
- 42: Anlagefläche von 34
- 43: Anlage von 38
- 44: Ausnehmung in 38
- 46: Doppelpfeil
- 48: Abstand

## Patentansprüche

1. Rohrschelle zur Festlegung eines Rohres (6), insbesondere eines Abflußrohres eines Sanitärelements, enthaltend einen auf einen Außendurchmesser des Rohres (6) abgestimmten Bügel (2), ein an die Außenfläche des Rohres (6) anlegbares Verbindungselement (26) sowie ein Halteelement (34) zur Verbindung mit einem Befestigungskörper (38),
dadurch gekennzeichnet, daß der Bügel (2) mittels des Verbindungselements (26) auf dem Rohr (6) derart befestigbar ist, daß die Rohrschelle um eine Längsachse (16) des Rohres (6) drehbar ist, und daß das Halteelement (34) durch Drehen um die Längsachse (16) mit dem Befestigungskörper (38) in Eingriff bringbar ist.

2. Rohrschelle nach Anspruch 1, dadurch gekennzeichnet, daß das Halteelement (34) eine Anlagefläche (42) und der Befestigungskörper (38) eine korrespondierende Anlagefläche (43) aufweisen, welche zum Beenden der Drehbewegung der Rohrschelle zur gegenseitigen Anlage bringbar sind.

3. Rohrschelle nach Anspruch 1 oder 2, dadurch gekennzeichnet, daß bei Beendigung der Drehbewegung der Rohrschelle selbsttätig die Verbindung des Halteelements (34) mit dem Befestigungskörper (38) erfolgt und/oder daß das Halteelement (34) und der Befestigungskörper (38) miteinander korrespondierende Rastelemente aufweisen.

4. Rohrschelle nach Anspruch 2 oder 3, dadurch gekennzeichnet, daß die Anlageflächen (42, 43) zumindest näherungsweise parallel zur Längsachse (16) ausrichtbar sind.

5. Rohrschelle nach einem der Ansprüche 1 bis 4, dadurch gekennzeichnet, daß die Rohrschelle mit dem Halteelement (34) bezüglich des Befestigungskörpers (38) in wenigstens zwei axial beabstandet angeordneten Positionen mit dem Befestigungskörpcr (38) koppelbar ist.

6. Rohrschelle nach einem der Ansprüche 1 bis 5, dadurch gekennzeichnet, daß der Bügel (2) sich über einen Umfangs-Winkel (20) erstreckt, welcher größer als 180 Winkelgrade ist und/oder daß freie Enden (20, 22) des Bügels (2) einen Abstand (24) aufweisen, welcher kleiner ist als der Innendurchmesser (18) des Bügels (2).

7. Rohrschelle nach einem der Ansprüche 1 bis 6, dadurch gekennzeichnet, daß die Rohrschelle aus federelastischem Werkstoff, insbesondere Kunststoff, besteht und/oder daß das Verbindungselement (26) zumindest teilweise als flexibles Band ausgebildet ist.

8. Rohrschelle nach einem der Ansprüche 1 bis 3, dadurch gekennzeichnet, daß das Verbindungselement (26) einteilig mit dem Bügel (2) ausgebildet ist und/oder an dessen einem freien Ende (22) angeordnet ist und/oder daß das Verbindungselement (26) ein Rastelement (28) aufweist, welches mit einem Rastkörper (30) des Bügels (2) in Eingriff bringbar ist.

9. Rohrschelle nach einem der Ansprüche 1 bis 8, dadurch gekennzeichnet, daß das Halteelement (34) vorzugsweise in der Mitte der Umfangsrichtung des Bügels (2) angeordnet ist und/oder daß das Halteelement (34) im wesentlichen in einer Axialebene angeordnet ist, in welcher die Längsachse (16) liegt, wobei der Bügel (2) im wesentlichen in einer Radialebene bezüglich der Längsachse (16) angeordnet ist und/oder daß das Halteelement (34) wenigstens einen Rastarm (36) aufweist, welcher mit wenigstens einem zugeordneten Rastteil, welches insbesondere als Ausnehmung (44) ausgebildet ist, des Befestigungskörpers (38) korrespondiert, wobei der Befestigungskörper (38) vorzugsweise eine vorgegebene Anzahl der genannten Rastteile oder Ausnehmungen (44) aufweist.

10. Rohrschelle nach einem der Ansprüche 1 bis 9, dadurch gekennzeichnet, daß der Bügel (2) einen T-förmigen Querschnitt aufweist und/oder daß der Bügel (2) eine radial nach außen gerichtete Rippe (17) aufweist, welche sich vorzugsweise über den gesamten Außenumfang des Bügels (2) erstreckt.

## Claims

1. Pipe clamp for securing a pipe (6), in particular a drain pipe of a sanitary element, comprising a clip (2) adapted to an outer diameter of the pipe (6), a connecting element (26) which can bear against the outer face of the pipe (6) and a holding element (34) for connection to a fixing body (38), characterised in that the clip (2) can be secured to the pipe (6) by means of the connecting element (26) in such a manner that the pipe clamp can be rotated about a longitudinal axis (16) of the pipe (6) and that the holding element (34) can be brought into engagement with the fixing body (38) by rotating it about the longitudinal axis (16).

2. Pipe clamp according to claim 1, characterised in that the holding element (34) has a bearing surface (42) and the fixing body (38) has a corresponding bearing surface (43) which can be brought to bear against one another in order to end the rotational movement of the pipe clamp.

3. Pipe clamp according to claim 1 or claim 2, characterised in that the holding element (34) is automatically connected to the fixing body (38) at the end of the rotational movement of the pipe clamp and/or that the holding element (34) and the fixing body (38) have corresponding locking elements.

4. Pipe clamp according to claim 2 or claim 3, characterised in that the bearing surfaces (42, 43) can be aligned at least approximately parallel to the longitudinal axis (16).

5. Pipe clamp according to one of claims I to 4, characterised in that the pipe clamp can be coupled with the fixing body (38) in at least two axially spaced positions by means of the holding element (34).

6. Pipe clamp according to one of claims 1 to 5, characterised in that the clip (2) extends over a circumferential angle (20) which is greater than 180 angular degrees and/or that free ends (20, 22) of the clip (2) are at a distance (24) from one another which is smaller than the inner diameter (18) of the clip (2).

7. Pipe clamp according to one of claims 1 to 6, characterised in that the pipe clamp consists of resilient material, in particular plastic, and/or that the connecting element (26) is at least partly in the form of a flexible strip.

8. Pipe clamp according to one of claims 1 to 3, characterised in that the connecting element (26) is made in one piece with the clip (2) and/or is arranged at one free end (22) thereof and/or that the connecting element (26) has a locking element (28) which can be brought into engagement with a locking body (30) of the clip (2).

9. Pipe clamp according to one of claims 1 to 8, characterised in that the holding element (34) is preferably arranged in the centre of the circumferential direction of the clip (2) and/or that the holding element (34) is arranged substantially in an axial plane in which the longitudinal axis (16) is situated, the clip (2) being arranged substantially in a radial plane with respect to the longitudinal axis (16), and/or that the holding element (34) has at least one locking arm (36) which corresponds with at least one associated locking part of the fixing body (38), in particular in the form of a recess (44), the fixing body (38) preferably having a predetermined number of the said locking parts or recesses (44).

10. Pipe clamp according to one of claims 1 to 9, characterised in that the clip (2) has a T-shaped cross section and/or that the clip (2) has a radially outwardly directed rib (17) which preferably extends around the entire outer circumference of the clip (2).

## Revendications

1. Collier de serrage pour la fixation d'un tuyau (6), en particulier d'un tuyau d'évacuation d'un élément sanitaire, comprenant un arceau (2) adapté au diamètre extérieur du tuyau (6), un élément de liaison (26) pouvant se placer sur la surface extérieure du tuyau (6), ainsi qu'un élément de maintien (34) en vue de la liaison avec un corps de fixation (38),
***caractérisé en ce que*** l'arceau (2) peut se fixer sur le tuyau (6) au moyen de l'élément de liaison (26) de telle manière que le collier de serrage puisse tourner autour d'un axe longitudinal (16) du tuyau (6) et ***en ce que*** l'élément de maintien (34) peut être mis en prise avec le corps de fixation (38) par rotation autour de l'axe longitudinal (16).

2. Collier de serrage selon la Revendication 1, ***caractérisé en ce que*** l'élément de maintien (34) présente une surface d'appui (42) et le corps de fixation (38) présente une surface d'appui correspondante (43), lesquelles peuvent être mises en appui mutuel pour stopper le mouvement de rotation du collier de serrage.

3. Collier de serrage selon la Revendication 1 ou 2, ***caractérisé en ce qu***'à la fin du mouvement de rotation du collier de serrage, la liaison de l'élément de maintien (34) avec le corps de fixation (38) s'effectue automatiquement et/ou ***en ce que*** l'élément de maintien (34) et le corps de fixation (38) présentent des éléments d'encliquetage mutuellement correspondants.

4. Collier de serrage selon la Revendication 2 ou 3, ***caractérisé en ce que*** les surfaces d'appui (42, 43) peuvent être orientées au moins approximativement parallèlement à l'axe longitudinal (16).

5. Collier de serrage selon l'une quelconque des Revendications 1 à 4, ***caractérisé en ce que*** le collier de serrage peut s'accoupler au corps de fixation (38) avec l'élément de maintien (34), par rapport au corps de fixation (38), dans au moins deux positions distantes axialement.

6. Collier de serrage selon l'une quelconque des Revendications 1 à 5, ***caractérisé en ce que*** l'arceau (2) s'étend sur un angle (20) de la périphérie qui est supérieur à 180 degrés d'angle et/ou ***en ce que*** les extrémités libres (20, 22) de l'arceau (2) présentent une distance (24) qui est inférieure au diamètre intérieur (18) de l'arceau (2).

7. Collier de serrage selon l'une quelconque des Revendications 1 à 6, ***caractérisé en ce que*** le collier de serrage se compose d'un matériau élastique, en particulier une matière synthétique, et/ou ***en ce que*** l'élément de liaison (26) est conformé au moins partiellement en bande flexible.

8. Collier de serrage selon l'une quelconque des Revendications 1 à 3, ***caractérisé en ce que*** l'élément de liaison (26) est conformé d'un seul tenant avec l'arceau (2) et/ou est placé à sa première extrémité libre (22) et/ou ***en ce que*** l'élément de liaison (26) présente un élément d'encliquetage (28) qui peut être mis en prise avec un corps d'encliquetage (30) de l'arceau (2).

9. Collier de serrage selon l'une quelconque des Revendications 1 à 8, ***caractérisé en ce que*** l'élément d'arrêt (34) est placé de préférence au milieu de la direction périphérique de l'arceau (2) et/ou ***en ce que*** l'élément d'arrêt (34) est placé pour l'essentiel dans un plan axial dans lequel se trouve l'axe longitudinal (16), l'arceau (2) étant placé pour l'essentiel dans un plan radial par rapport à l'axe longitudinal (16) et/ou ***en ce que*** l'élément de maintien (34) présente au moins un bras d'encliquetage (36) qui correspond avec une partie d'encliquetage associée du corps de fixation (38), laquelle est conformée en particulier en évidemment (44), le corps de fixation (38) présentant de préférence un nombre prédéterminé desdites parties d'encliquetage ou desdits évidements (44).

10. Collier de serrage selon l'une quelconque des Revendications 1 à 9, ***caractérisé en ce que*** l'arceau (2) présente une section transversale en T et/ou ***en ce que*** l'arceau (2) comprend une membrure (17) orientée vers l'extérieur, qui s'étend de préférence sur toute la périphérie extérieure de l'arceau (2).
